# EUROPEAN PATENT APPLICATION

(11) **EP 2 848 804 A1**
(43) Date of publication of application: **18.03.2015**
(21) Application number: 13184261.9
(22) Date of filing: 13.09.2013
(51) Int. Cl.: F03D 7/02, F03D 7/04

(54) **Wind turbine test method**

(71) Applicant: Siemens Aktiengesellschaft, 80333 München (DE)
(72) Inventor: Bech, John, 8450 Hammel (DK)

(57) **Abstract**

A wind turbine test method is provided including steps of:
- disconnecting a wind park (1) including a plurality of wind turbines (2) interconnected by a collector grid (3) from a utility grid (5);
- selecting one of the plurality of wind turbines (2) as a wind turbine (2) under test and configuring at least one of the remaining wind turbines (2) of the wind park (1) as a load wind turbine (2);
- operating the at least one load wind turbine (2) in a motor mode of operation and operating the wind turbine (2) under test in a generator mode of operation; and
- monitoring the wind turbine (2) under test.

A second aspect of the invention provides a wind turbine (2) for use in the wind turbine test method of the invention.

## Description

### Technical Area

The invention relates to a wind turbine test method and a wind turbine for use in the wind turbine test method of the invention.

### Technical Background

Wind parks comprising tens to hundreds of wind turbines provide a significant amount of power to the utility grid they are connected to. In order to ensure correct operation and stability of the utility grid, the wind park has to comply with certain grid code requirements which may include a specific behaviour in response to variations of grid voltage, grid frequency or reactive power as well as during certain utility grid faults. Each wind turbine model needs to be tested to ensure grid code compliance. However, the environment in which a wind turbine operates may greatly influence its response to various test cases. Thus, it is desirable to test the wind turbine onsite. For such purposes a designated full-scale converter or a low-voltage ride-through test container can be used. Unfortunately such means are very costly and can only be used for testing voltage faults where large voltage variations occur. The invention therefore seeks to provide an improved and less expensive way of testing wind turbine for grid code compliance.

### Summary of the Invention

For this reason the invention provides a wind turbine test method including steps of:
- disconnecting a wind park including a plurality of wind turbines interconnected by a collector grid from a utility grid;
- selecting one of the plurality of wind turbines as a wind turbine under test and configuring at least one of the remaining wind turbines of the wind park as a load wind turbine;
- operating the at least one load wind turbine in a motor mode of operation and operating the wind turbine under test in a generator mode of operation; and
- monitoring the wind turbine under test.

The wind turbine test method of the invention has an advantage in that it does not require the use of dedicated means for testing grid code compliance such as full-scale converters or test containers. The method of the invention uses the converters of other wind turbines installed in the same wind park. During the test these wind turbines act as loads mimicking the behaviour of the utility grid to be modelled during the specific test.

The wind turbine test method preferably further includes operating the at least one load wind turbine in accordance with at least one predefined test scheme. Such a predefined test scheme may e.g. be a low-voltage ride through test or a phase drop test.

Operating the at least one load wind turbine may include setting a reference voltage for the collector grid and controlling the at least one load wind turbine in accordance with the reference voltage. In such a case the at least one load wind turbine operates in such a way that the voltage at the collector grid corresponds to the set reference voltage.

Preferably setting the reference voltage includes varying the set reference voltage while monitoring the wind turbine under test. Some tests may include testing the response of the wind turbine under test to transient grid conditions such as varying grid voltages. Thus, it is advantageous that the reference voltage on the collector grid can be varied during the test.

Operating the at least one load wind turbine may also include setting a reference frequency for the collector grid and controlling the at least one load wind turbine in accordance with the reference frequency. The at least one load wind turbine is operated such that the set reference frequency is generated on the collector grid of the wind park.

Setting the reference frequency may include varying the set reference frequency while monitoring the wind turbine under test. In this way the behaviour of the wind turbine under test may be tested for varying grid frequencies.

The at least one load wind turbine may include a plurality of load wind turbines. In such a case a need arises for coordinating the various load wind turbines. For this reason the method of the invention may further comprise synchronising the plurality of load wind turbines with each other.

This is especially useful when the load wind turbines are operated in accordance with a sequence of a plurality of predefined test schemes because then all of the load wind turbines can change the predefined test schemes concurrently, e.g. at predefined points in time.

Operating the at least one load wind turbine in a motor mode of operation includes operating the at least one load wind turbine in a motor mode of operation during a first time period and operating the at least one load wind turbine in a generator mode of operation during a second time period following or preceding the first time period. This is to say that the load wind turbines may also operate in a generator mode for short periods of time during the wind turbine test method. This may be necessary in order to provide electric power from the load wind turbines to the collector grid e.g. for over-voltage tests where a voltage on the collector grid needs to rise. Generally the load wind turbines control the collector grid voltage as seen by the wind turbine under test which may include providing electric power to the collector grid during short periods of time. Thus, the expression "operating in a motor mode of operation" should not be construed as to exclude momentary provision of electric power from the load wind turbine to the collector grid.

A second aspect of the invention provides a wind turbine that may be used in the wind turbine test method. The wind turbine may be adapted to detect a collector grid voltage, to compare the detected collector grid voltage to a reference voltage and to operate in a motor mode of operation in accordance with a result of the comparison thereby controlling the collector grid voltage to meet the reference voltage. Additionally or alternatively the wind turbine may be adapted to detect a collector grid frequency, to compare the detected collector grid frequency to a reference frequency and to operate in a motor mode of operation in accordance with a result of the comparison thereby controlling the collector grid frequency to meet the reference frequency.

### Brief Description of the Drawings

The invention will be better understood from the following drawings in which a preferred embodiment of the invention will be illustrated by way of example. In the drawings:
Figure 1 shows a wind park in which a wind turbine may be tested using the wind turbine test method of the invention;
Figure 2 illustrates a first grid code compliance test;
Figure 3 illustrates a second grid code compliance test;
Figure 4 shows a first embodiment of a wind turbine according to the invention; and
Figure 5 shows a second embodiment of a wind turbine according to the invention.

### Detailed Description of the Drawings

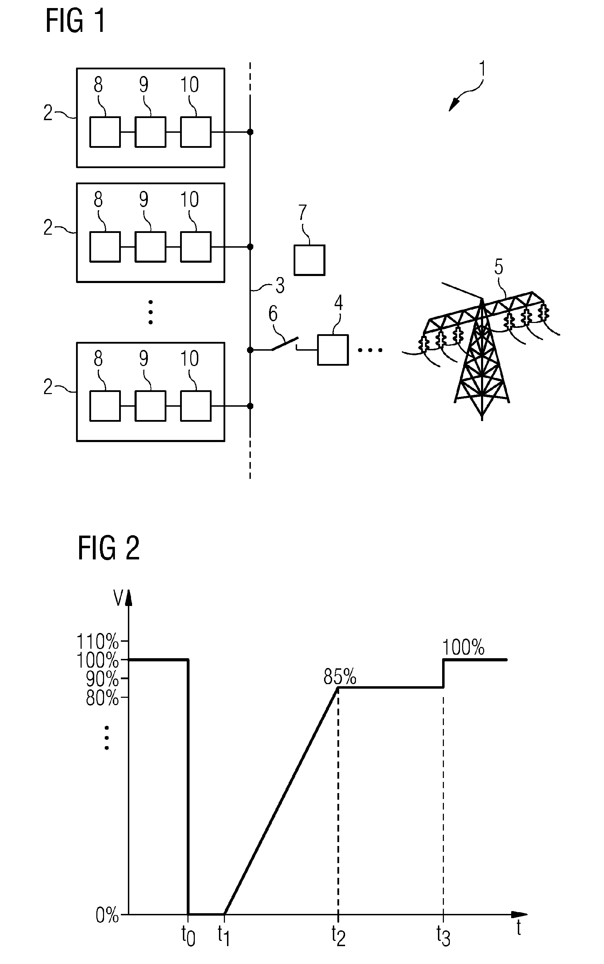

Figure 1 shows a wind park 1 comprising a plurality of wind turbines 2 interconnected by a collector grid 3. The number of wind turbines in the wind park 1 may range from several wind turbines 2 to hundreds or even thousands of wind turbines 2.

The wind park 1 connects to a utility grid 5 by means of a park transformer 4 which transforms a collector grid voltage at the collector grid 3 to a utility grid voltage at the utility grid 5. The park transformer 4 may be a multi-tap transformer capable of providing a selectable transformation ratio. Furthermore the wind park 1 connects to the utility grid 5 through a switch 6 that may be arranged on the park side or the grid side of the park transformer 4. When open, the switch 6 disconnects the wind park 1 from the utility grid 5 such that the wind park 1 operates in island mode. In island mode the wind turbines 2 of the wind park 1 can be tested for grid code compliance without disturbing the utility grid 5.

Operation of the wind park 1 is controlled by a wind park controller 7. The wind park controller 7 may set reference voltages and reference frequencies for each of the wind turbines and controls the switch 6 and the park transformer 4.

Each wind turbine 2 comprises a generator 8 which is driven by a wind rotor (not shown), a full-scale converter 9 for converting electric power between the generator 8 and the collector grid 3, and a wind turbine transformer 10 for interfacing the full-scale converter 9 to the collector grid 3. Commonly a voltage present at an output of the full-scale converter 9 will be lower than the collector grid voltage and the collector grid voltage will be lower than the utility grid voltage. The wind turbine transformers 10 and the park transformer 4 may also be used for providing reactive power to the utility grid 5 as is known in the art.

Figure 2 illustrates a first grid code compliance test which is often referred to as a low-voltage ride through test. The diagram shows a transient waveform of the utility grid voltage. The utility grid voltage is shown in per cents of its nominal value (100 per cent). During normal operation the utility grid voltage will usually vary between approximately 90 per cent and about 115 per cent of its nominal value. However, when a grid fault happens, the utility grid voltage may temporarily drop to very low values. Such a scenario is the subject of the low-voltage ride through test:

At a point in time to the utility grid voltage suddenly drops to zero or a value very close to zero. This means that the wind park 1 of Figure 1 will suddenly experience a short circuit which means extreme stress on the converters, transformers, and interconnections. However, according to the grid code the wind park 1 is expected to continue operation and not to disconnect from the utility grid 5. After a time period of 0.2 seconds (t₁) the utility grid voltage starts to recover and ramps up within 2 seconds to about 85% of its nominal value at t₂. The utility grid voltage remains this low for about 120 seconds where it returns to its nominal value ending the test. When a wind turbine 2 is tested in accordance with the low-voltage ride through test illustrated in Figure 2, the wind turbine 2 needs to continue to provide electric power throughout the low-voltage period. In order to do this the voltage shown in Figure 2 or a voltage that would be experienced by the wind turbine 2 if the utility grid voltage varied as shown in Figure 2 needs to be provided to the terminals of the wind turbine. This is commonly done using a low-voltage ride through container or a similar test device. However, such test devices are expensive and connecting each wind turbine individually to such a test device may be time consuming. Thus, the wind turbine test method of the invention configures one or more wind turbines 2 of the wind park 1 as load wind turbines which may operate in a motor mode of operation thus draining electric power from the collector grid 3 to set the collector grid voltage as required for the low-voltage ride through test. One or more wind turbines under test may then be tested for their behaviour in response to the collector grid voltage controlled by the load wind turbines.

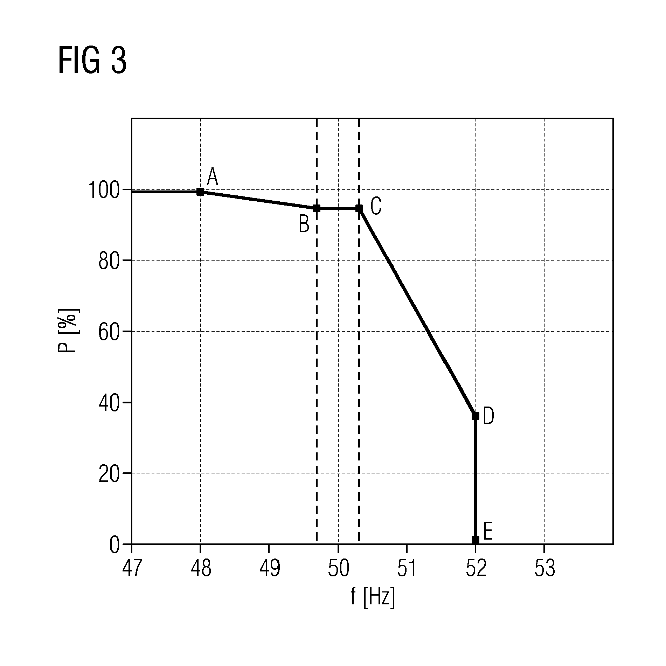

Figure 3 illustrates a second grid code compliance test. The wind park 1 and the wind turbine 2 are expected to provide power in accordance with a frequency of the utility grid 5 whose nominal frequency is usually 50 Hz (may be 60 Hz depending on the country). The diagram of Figure 3 shows the percentage of available active power P to be provided to the utility grid as a function of the utility grid frequency f in Hz. When the utility grid frequency reaches 52 Hz, the wind park 1 is expected to shut down because too much electric power appears to be present in the utility grid leading to an increase in the utility grid frequency. For frequencies close to the nominal utility grid frequency approximately 95 per cent of the available active power may be provided to the utility grid 5 which means that a reserve should be maintained for times where a low utility grid frequency will be experienced. At utility grid frequencies of 48 Hz and below all available active power should be provided to the utility grid 5 to help stabilise the utility grid. As with the low-voltage ride through test a voltage needs to be generated for the second grid code compliance test without disturbing the utility grid 5. Thus, the wind park 1 will be disconnected from the utility grid 5 by means of the switch 6 and one or more wind turbines 2 of the wind park 1 will be configured as load wind turbines. The load wind turbines control the voltage of the collector grid 3 such that the wind turbine under test experiences a voltage with varying frequency at its terminals. For example, the frequency of the collector grid 3 may be set to 50 Hz and then be slowly varied towards lower frequencies (e.g. down to 47 Hz). Afterwards the frequency may return to 50 Hz and be risen to 52 Hz. During this time the load wind turbines may operate in a motor mode of operation to consume the electric power provided by the wind turbine under test.

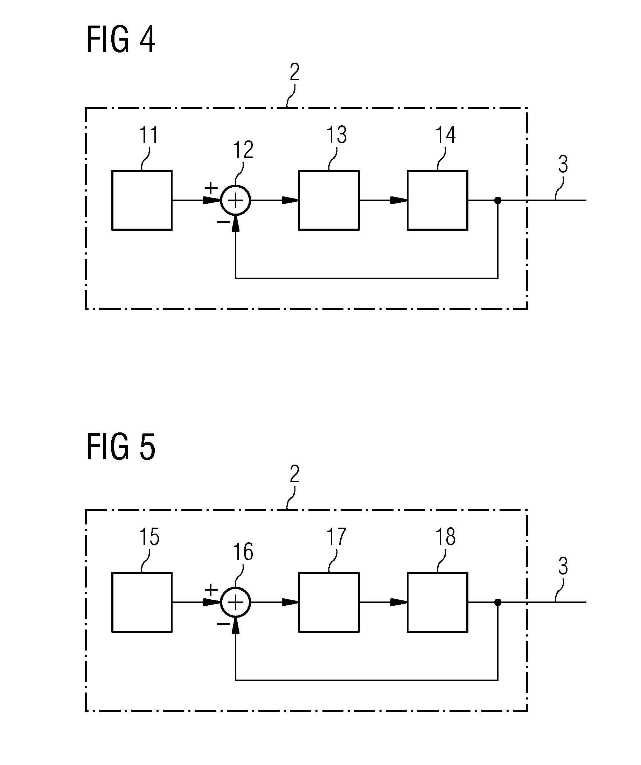

Figure 4 shows a first embodiment of a wind turbine 2 according to the invention. The wind turbine 2 of Figure 4 may be configured as a load wind turbine during the wind turbine test method of the invention. It may be used for a grid code compliance test as illustrated by Figure 2.

The wind turbine 2 connects to the collector grid 3 whose collector grid voltage is sensed by the wind turbine 2. A voltage test profile 11 provides a voltage reference, i.e. a desired collector grid voltage for the test that is being carried out. An adder 12 compares the voltage reference to the sensed voltage by subtracting the sensed voltage from the voltage reference. The resulting voltage error is fed to a loop filter or a proportional-integral controller (PI-controller) 13 which provides a control signal for a full-scale converter 14 of the wind turbine 2. The control signal may be a reactive current reference. The output of the full-scale converter 14 thus changes the collector grid voltage to reduce the voltage error determined by the adder 12. Hence, the collector grid voltage closely follows the voltage reference determined by the voltage test profile 11. The wind turbine 2 operating as a load wind turbine as illustrated in Figure 4 serves to provide the test voltages required for the various grid code compliance tests to the wind turbine under test.

Figure 5 shows a second embodiment of a wind turbine according to the invention. The wind turbine 2 of Figure 5 may be configured as a load wind turbine during the wind turbine test method of the invention. It may be used for a grid code compliance test as illustrated by Figure 3. Preferably a wind turbine 2 will be able to operate as shown in either of Figures 4 and 5 to allow for a complete run of grid code compliance tests.

The wind turbine 2 of Figure 5 connects to the collector grid 3 whose collector grid frequency is sensed and fed back to an adder 16 which will compare the sensed collector grid frequency to a frequency reference provided by a frequency test profile 15. The frequency test profile may provide varying frequency references in accordance with the grid code compliance test to be carried out, e.g. the grid code compliance test explained above referring to Figure 3. A frequency error found by the adder 16 will be fed to a loop filter or proportional-integral controller (PI-controller) 17 which generates a control signal for a full-scale converter 18 of the wind turbine 2. The control signal may be an active current reference. The full-scale converter 18 changes the frequency of the collector grid in accordance with the control signal thus providing a collector grid voltage signal with the desired collector grid frequency. The wind turbine 2 of Figure 5 thereby serves to provide a suitable voltage signal for testing another wind turbine connected to the same collector grid 3.

The wind turbine test method and the wind turbine of the invention allow for mutual testing of all wind turbines in a wind park. This overcomes the need for any special test devices and greatly reduces the time required for testing all wind turbines in a wind park.

Although the invention has been shown and described with respect to exemplary embodiments thereof, various other changes, omissions, and additions in form and detail thereof may be made therein without departing from the spirit and scope of the invention.

While the invention has been described in connection with a preferred embodiment, it is not intended to limit the scope of the invention to the particular form set forth, but on the contrary, it is intended to cover such alternatives, modifications, and equivalents as may be included within the scope of the invention as defined by the appended claims.

## Claims

1. A wind turbine test method including steps of:
- disconnecting a wind park (1) including a plurality of wind turbines (2) interconnected by a collector grid (3) from a utility grid (5);
- selecting one of the plurality of wind turbines (2) as a wind turbine (2) under test and configuring at least one of the remaining wind turbines (2) of the wind park (1) as a load wind turbine (2);
- operating the at least one load wind turbine (2) in a motor mode of operation and operating the wind turbine (2) under test in a generator mode of operation; and
- monitoring the wind turbine (2) under test.

2. The wind turbine test method of claim 1, further including operating the at least one load wind turbine (2) in accordance with at least one predefined test scheme (11, 15).

3. The wind turbine test method of claim 2, wherein operating the at least one load wind turbine (2) includes setting a reference voltage for the collector grid (3) and controlling the at least one load wind turbine (2) in accordance with the reference voltage.

4. The wind turbine test method of claim 3, wherein setting the reference voltage includes varying the set reference voltage while monitoring the wind turbine (2) under test.

5. The wind turbine test method of one of the claims 2 through 4, wherein operating the at least one load wind turbine (2) includes setting a reference frequency for the collector grid (3) and controlling the at least one load wind turbine (2) in accordance with the reference frequency.

6. The wind turbine test method of claim 5, wherein setting the reference frequency includes varying the set reference frequency while monitoring the wind turbine (2) under test.

7. The wind turbine test method of one of the preceding claims, wherein the at least one load wind turbine (2) includes a plurality of load wind turbines (2), further comprising synchronising the plurality of load wind turbines (2) with each other.

8. The wind turbine test method of claims 2 and 7, wherein the at least one load wind turbine (2) is operated in accordance with a sequence of a plurality of predefined test schemes.

9. The wind turbine test method of one of the preceding claims, wherein operating the at least one load wind turbine (2) in a motor mode of operation includes operating the at least one load wind turbine (2) in a motor mode of operation during a first time period and operating the at least one load wind turbine in a generator mode of operation during a second time period following or preceding the first time period.

10. A wind turbine (2) adapted to detect a collector grid voltage, to compare the detected collector grid voltage to a reference voltage and to operate in a motor mode of operation in accordance with a result of the comparison thereby controlling the collector grid voltage to meet the reference voltage.

11. A wind turbine (2) adapted to detect a collector grid frequency, to compare the detected collector grid frequency to a reference frequency and to operate in a motor mode of operation in accordance with a result of the comparison thereby controlling the collector grid frequency to meet the reference frequency.
